(19) Europäisches Patentamt / European Patent Office / Office européen des brevets

(11) **EP 2 411 422 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**17.06.2020 Patentblatt 2020/25**

(45) Hinweis auf die Patenterteilung:
**24.07.2013 Patentblatt 2013/30**

(21) Anmeldenummer: **10710301.2**

(22) Anmeldetag: **22.03.2010**

(51) Int Cl.:
*C08F 8/00* (2006.01)     *C08J 3/24* (2006.01)
*C08F 8/42* (2006.01)

(86) Internationale Anmeldenummer:
**PCT/EP2010/053657**

(87) Internationale Veröffentlichungsnummer:
**WO 2010/108875 (30.09.2010 Gazette 2010/39)**

(54) **VERFAHREN ZUR HERSTELLUNG OBERFLÄCHENNACHVERNETZTER WASSERABSORBIERENDER POLYMERPARTIKEL**

METHOD FOR PRODUCING SURFACE POST-CROSS-LINKED, WATER ABSORBING POLYMER PARTICLES

PROCÉDÉ DE PRODUCTION DE PARTICULES POLYMÈRES HYDROPHILES À POST-RÉTICULATION SUPERFICIELLE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.03.2009 US 162693 P**

(43) Veröffentlichungstag der Anmeldung:
**01.02.2012 Patentblatt 2012/05**

(73) Patentinhaber: **BASF SE**
**67056 Ludwigshafen am Rhein (DE)**

(72) Erfinder:
• **HAMILTON, Patrick**
  **Charlotte**
  **NC 28278 (US)**
• **HOELLER, Olaf**
  **Charlotte**
  **NC 28173 (US)**
• **CHIANG, William G-J**
  **Charlotte**
  **NC 28226 (US)**
• **LOPEZ VILLANUEVA, Francisco Javier**
  **68199 Mannheim (DE)**
• **GRILL, Joseph**
  **Charlotte**
  **NC 28273 (US)**

(74) Vertreter: **BASF IP Association**
**BASF SE**
**G-FLP-C006**
**67056 Ludwigshafen (DE)**

(56) Entgegenhaltungen:
WO-A1-00/53664        WO-A1-01/74913
WO-A1-95/26209        WO-A1-2007/037522
WO-A1-2010/057912     WO-A2-2004/096303
WO-A2-2007/121937     WO-A2-2008/095983
JP-A- H0 859 230      US-A- 4 043 952
US-A- 5 002 986       US-A- 5 847 031

• Buchholz, F. et al: "Modern Superabsorbent Polymer Technology", 1998 pages 69-74, 87-103,
• Kirk-Otmer: Encyclopedia of Chemical Technology, vol. B2 , pages 274-275,
• Eidesstattliche Versicherung von Herrn Dr. Christian Speyerer

EP 2 411 422 B2

**Beschreibung**

Die vorliegende Erfindung betrifft ein Verfahren zur Herstellung oberflächennachvernetzter wasserabsorbierender Polymerpartikel, wobei die wasserabsorbierenden Polymerpartikel vor, während oder nach der Oberflächennachvernetzung mit mindestens einem basischen Salz aus einem dreiwertigen Metallkation und einem einwertigen Carbonsäureanion, beschichtet werden.

Wasserabsorbierende Polymerpartikel werden zur Herstellung von Windeln, Tampons, Damenbinden und anderen Hygieneartikeln, aber auch als wasserzurückhaltende Mittel im landwirtschaftlichen Gartenbau verwendet. Die wasserabsorbierenden Polymerpartikel werden auch als Superabsorber bezeichnet.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Die Eigenschaften der wasserabsorbierenden Polymerpartikel können beispielsweise über die verwendete Vernetzermenge eingestellt werden. Mit steigender Vernetzermenge sinkt die Zentrifugenretentionskapazität (CRC) und die Absorption unter einem Druck von 21,0 $g/cm^2$ (AUL0.3psi) durchläuft ein Maximum.

Zur Verbesserung der Anwendungseigenschaften, wie beispielsweise Flüssigkeitsweiterleitung (SFC), Gelbettpermeabilität (GBP) und Absorption unter einem Druck von 49.2 $g/cm^2$ (AUL0.7psi), werden wasserabsorbierende Polymerpartikel im allgemeinen oberflächennachvernetzt. Dadurch steigt der Vernetzungsgrad der Partikeloberfläche, wodurch die Absorption unter einem Druck von 49,2 $g/cm^2$ (AUL0.7psi) und die Zentrifugenretentionskapazität (CRC) zumindest teilweise entkoppelt werden können. Diese Oberflächennachvernetzung kann in wässriger Gelphase durchgeführt werden. Vorzugsweise werden aber getrocknete, gemahlene und abgesiebte Polymerpartikel (Grundpolymer) an der Oberfläche mit einem Oberflächennachvernetzer beschichtet und thermisch oberflächennachvernetzt. Dazu geeignete Vernetzer sind Verbindungen, die mit mindestens zwei Carboxylatgruppen der wasserabsorbierenden Polymerpartikel kovalente Bindungen bilden können.

Zur Verbesserung der Flüssigkeitsweiterleitung bzw. Gelbettpermeabilität werden die wasserabsorbierenden Polymerpartikel häufig vor der thermischen Oberflächennachvernetzung mit polyvalenten Metallkationen beschichtet. Derartige Verfahren sind beispielsweise aus WO 2000/053644 A1, WO 2000/053664 A1, WO 2005/108472 A1, WO2007/037522, WO2007/121937 und WO2008/092843 A1 bekannt.

Aufgabe der vorliegenden Erfindung war die Bereitstellung eines verbesserten Verfahrens zur Herstellung wasserabsorbierender Polymerpartikel, insbesondere hochpermeabler wasserabsorbierender Polymerpartikel.

Gelöst wurde die Aufgabe durch ein Verfahren zur Herstellung wasserabsorbierender Polymerpartikel durch Polymerisation einer Monomerlösung oder -suspension, enthaltend

a) mindestens ein ethylenisch ungesättigtes, säuregruppentragendes Monomer, das zumindest teilweise neutralisiert sein kann,

b) mindestens einen Vernetzer,

c) mindestens einen Initiator,

d) optional ein oder mehrere mit den unter a) genannten Monomeren copolymerisierbare ethylenisch ungesättigte Monomere und

e) optional ein oder mehrere wasserlösliche Polymere,

umfassend Trocknung, Mahlung, Klassierung, und Oberflächennachvernetzung,

dadurch gekennzeichnet, dass die wasserabsorbierenden Polymerpartikel vor, während oder nach der Oberflächennachvernetzung mit mindestens einem basischen Salz aus einem dreiwertigen Metallkation und einem einwertigen Carbonsäureanion beschichtet werden, wobei das molare Verhältnis von Metallkation zu Carbonsäureanion in den basischen Salzen von 0,6 bis 1,2 beträgt und von 0,0008 bis 0,02 mol des dreiwertigen Metallkations pro 100 g der zu beschichtenden wasserabsorbierende Polymerpartikel eingesetzt werden.

Bei den basischen Salzen sind nicht alle in wässrigen Lösungen als Hydroxylanionen ($OH^-$) abspaltbaren Hydroxidgruppen der salzbildenden Basen durch Säuregruppen ersetzt.

Das molare Verhältnis von Metallkation zu Carbonsäureanion in den basischen Salzen beträgt üblicherweise von 0,6 bis 1,2, ganz besonders bevorzugt von 0,8 bis 1,2.

Das dreiwertige Metallkation ist vorzugsweise ein Metallkation der dritten Hauptgruppe, der dritten Nebengruppe oder der Lanthanidengruppe des Periodensystems der Elemente, besonders bevorzugt Aluminium, Scandium, Yttrium, Lanthan oder Cer, ganz besonders bevorzugt Aluminium.

Das einwertige Carbonsäureanion ist vorzugsweise das Anion einer $C_1$- bis $C_4$-Alkansäure, besonders bevorzugt das Anion der Ameisensäure (Formiat), der Essigsäure (Acetat), der Propionsäure (Propionat) und der Buttersäure (Butyrat), ganz besonders bevorzugt das Anion der Essigsäure.

Geeignete basische Salze aus dreiwertigem Metallkation und einwertigem Carbonsäureanion sind beispielsweise basisches Aluminiumformiat, basisches Aluminiumacetat und basisches Aluminiumpropionat. Ganz besonders bevorzugt ist Aluminiummonoacetat (CAS Nr. [7360-44-3]).

Die basischen Salze aus dreiwertigem Metallkation und einwertigem Carbonsäureanion können stabilisiert werden. Geeignete Stabilisatoren sind beispielsweise polyvalente Alkohole, wie Mannit und Glyzerin, lösliche Kohlenhydrate, wie Disaccharide und Monosaccharide, polyvalente anorganische Säuren, wie Borsäure und Phosphorsäure, Hydroxycarbonsäuren oder deren Salze, wie Zitronensäure, Milchsäure und Weinssäure, oder deren Salze, Dicarbonsäuren oder deren Salze, wie Adipinsäure und Bernsteinsäure, sowie Harnstoff und Thioharnstoff. Bevorzugt wird Borsäure und/oder Weinsäure als Stabilisator verwendet.

Die Art des Aufbringens der basischen Salze aus einem dreiwertigen Metallkation und einem einwertigen Carbonsäureanion unterliegt keiner Beschränkung. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US), Schugi Flexomix® (Hosokawa Micron BV; Doetinchem; NL), Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE).

Die erfindungsgemäße Beschichtung ist insbesondere dann vorteilhaft, wenn die Temperatur der wasserabsorbierenden Polymerpartikel nach der Beschichtung vorzugsweise mindestens 120°C, besonders bevorzugt mindestens 150°C, ganz besonders bevorzugt mindestens 180°C, beträgt. Derartige Temperaturen treten üblicherweise auf, wenn die Beschichtung vor oder während der thermischen Oberflächennachvernetzung durchgeführt wird.

Das basische Salz aus einem dreiwertigen Metallkation und einem einwertigen Carbonsäureanion wird vorzugsweise als wässrige Lösung verwendet. Die wässrigen Lösungen werden beispielsweise durch Lösen der entsprechenden basischen Salze in einem wässrigen Lösungsmittel, beispielsweise Wasser, hergestellt. Es ist aber auch möglich entsprechende Mengen der entsprechenden Base, beispielsweise Aluminiumhydroxid, und der entsprechenden Carbonsäure, beispielsweise Essigsäure, in einem wässrigen Lösungsmittel, beispielsweise Wasser, zu mischen.

Der Wassergehalt der wässrigen Lösung beträgt vorzugsweise von 60 bis 98 Gew.-%, besonders bevorzugt von 65 bis 90 Gew.-%, ganz besonders bevorzugt von 70 bis 85 Gew.-%. Um die Löslichkeit in der wässrigen Lösung zu erhöhen, kann die Lösung bei erhöhter Temperatur hergestellt und verwendet werden.

Die erfindungsgemäß einzusetzenden wässrigen Lösungen, enthaltend mindestens ein basisches Salz aus einem dreiwertigen Metallkation und einem einwertigen Carbonsäureanion, können bei längerer Lagerung zu Ausfällungen neigen. Vorteilhaft enthalten die Lösungen daher einen der oben genannten Stabilisatoren.

In einer bevorzugten Ausführungsform der vorliegenden Erfindung werden die wässrige Lösung, enthaltend mindestens ein basisches Salz aus einem dreiwertigen Metallkation und einem einwertigen Carbonsäureanion, und der Oberflächennachvernetzers im selben Mischer auf die wasserabsorbierenden Polymerpartikel aufgebracht. Die wässrige Lösung und der Oberflächennachvernetzers können dabei getrennt oder auch als gemeinsame Lösung dosiert werden.

In einer weiteren bevorzugten Ausführungsform der vorliegenden Erfindung wird das mindestens eine basische Salz aus einem dreiwertigen Metallkation und einem einwertigen Carbonsäureanion erst nach der Oberflächennachvernetzung aufgebracht. Zur Beschichtung können sowohl wässrige Lösungen als auch die entsprechenden ungelösten Salze, beispielsweise trockenes Aluminiummonoacetat, verwendet werden.

Der vorliegenden Erfindung liegt die Erkenntnis zugrunde, dass sich die Flüssigkeitsweiterleitung (SFC) und die Gelbettpermeabilität (GBP) oberflächennachvernetzter wasserabsorbierender Polymerpartikel durch das erfindungsgemäße Verfahren erheblich gesteigert werden kann.

Die bislang eingesetzten Salze, wie Aluminiumsulfat und Aluminiumlaktat, steigerten zwar die Flüssigkeitsweiterleitung (SFC), verbesserten die Gelbettpermeabilität (GBP) entweder nur, wenn die Beschichtung bei niedriger Temperatur durchgeführt wurde (Aluminiumsulfat), oder gar nicht (Aluminiumlaktat).

Weiterhin lässt sich mittels des erfindungsgemäßen Verfahrens die Gelbettpermeabilität (GBP) erhöhen ohne die Absorption unter einem Druck von 49.2 $g/cm^2$ (AUL0.7psi) zu senken.

Besonders vorteilhaft werden wasserabsorbierende Polymerpartikel vor der Oberflächennachvernetzung mit Aluminiumlaktat und nach der Oberflächennachvernetzung mit Aluminiummonoacetat beschichtet. Durch Beschichtung mit Aluminiumlaktat werden die Flüssigkeitsweiterleitung (SFC) und die Absorption unter einem Druck von 49.2 $g/cm^2$ (AUL0.7psi) erhöht. Durch anschließende Beschichtung mit Aluminiummonoacetat wird die Gelbettpermeabilität (GBP) erhöht.

Die wasserabsorbierenden Polymerpartikel werden durch Polymerisation einer Monomerlösung oder -suspension hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830A1 und WO 2002/032962 A2 beschrieben.

Bevorzugte Vernetzer b) sind Pentaerythrittriallylether, Tetraalloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxilierten und/oder propoxilierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentionskapazität (CRC) und die Absorption unter einem Druck von 21,0 g/cm$^2$ (AUL0.3psi) durchläuft ein Maximum.

Als Initiatoren c) können sämtliche unter den Polymerisationsbedingungen Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat, Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit und der in der Monomerlösung enthaltende Polymerisationsinhibitor deaktiviert werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren. Im Kneter wird das bei der Polymerisation einer wässrigen Monomerlösung oder -suspension entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Es ist aber auch möglich eine wässrige Monomerlösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2 und WO 2008/052971 A1 beschrieben.

Die Säuregruppen der erhaltenen Polymergele sind üblicherweise teilweise neutralisiert. Die Neutralisation wird vorzugsweise auf der Stufe der Monomeren durchgeführt. Dies geschieht üblicherweise durch Einmischung des Neutralisationsmittels als wässrige Lösung oder bevorzugt auch als Feststoff. Der Neutralisationsgrad beträgt vorzugsweise von 25 bis 95 mol-%, besonders bevorzugt von 30 bis 80 mol-%, ganz besonders bevorzugt von 40 bis 75 mol-%, wobei die üblichen Neutralisationsmittel verwendet werden können, vorzugsweise Alkalimetallhydroxide, Alkalimetalloxide, Alkalimetallkarbonate oder Alkalimetallhydrogenkarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumkarbonat oder Natriumhydrogenkarbonat sowie deren Mischungen.

Es ist aber auch möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das Polymergel wird dann vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur $T_g$ auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße (Feinkorn) an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walienstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 μm, besonders bevorzugt von 250 bis 600 μm, ganz besonders von 300 bis 500 μm. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 μm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel (Feinkorn) niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 μm, beträgt vorzugsweise mindestens 90 Gew.-%, besonders bevorzugt mindesten 95 Gew.-%, ganz besonders bevorzugt mindestens 98 Gew.-%.

Vorteilhaft beträgt der Anteil an Partikeln mit einer Partikelgröße von höchstens 600 μm, beträgt vorzugsweise mindestens 90 Gew.-%, besonders bevorzugt mindesten 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Die Polymerpartikel werden zurweiteren Verbesserung der Eigenschaften oberflächennachvernetzt. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidon und dessen Derivate, wie 2-Hydroxyethyl-2-oxazolidon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidone, in DE 102 04 937 A1 zyklische Harnstoffe, in DE 103 34 584 A1 bizyklische Amidacetale, in EP 1 199 327A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Glyzerin, Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyloxazolidin-2-on, Oxazolidin-2-on und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In der vorliegenden Erfindung wird vor, während oder nach der Oberflächennachvernetzung zusätzlich zu den Oberflächennachvernetzern mindestens ein basisches Salz aus einem dreiwertigen Metallkation und einem einwertigen Carbonsäureanion, auf die Partikeloberfläche aufgebracht.

Selbstverständlich ist es auch möglich zusätzlich weitere polyvalente Kationen einzusetzen. Geeignete polyvalente Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Karbonat, Hydrogenkarbonat, Nitrat, Phosphat, Hydrogenphosphat, Dihydrogenphosphat und Carboxylat, wie Acetat und Laktat, möglich. Aluminiumsulfat und Aluminiumlaktat sind bevorzugt. Es können auch Polyamine als weitere polyvalente Kationen eingesetzt werden.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt werden. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die O-berflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Die oberflächennachvernetzten Polymerpartikel können zur weiteren Verbesserung der Eigenschaften beschichtet oder nachbefeuchtet werden.

Die Nachbefeuchtung wird vorzugsweise bei 30 bis 80°C, besonders bevorzugt bei 35 bis 70°C, ganz besonders bevorzugt bei 40 bis 60°C, durchgeführt. Bei zu niedrigen Temperaturen neigen die wasserabsorbierenden Polymerpartikel zum Verklumpen und bei höheren Temperaturen verdampft bereits merklich Wasser. Die zur Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%. Durch die Nachbefeuchtung wird die mechanische Stabilität der Polymerpartikel erhöht und deren Neigung zur statischen Aufladung vermindert.

Geeignete Beschichtungen zur Verbesserung der Anquellgeschwindigkeit sowie der Flüssigkeitsweiterleitung (SFC) bzw. Gelbettpermeabilität (GBP) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Anschließend können die oberflächennachvernetzten Polymerpartikel erneut klassiert werden, wobei zu kleine und/oder zu große Polymerpartikel abgetrennt und in das Verfahren rückgeführt werden.

Die wasserabsorbierenden Polymerpartikel werden mittels der nachfolgend beschriebenen Testmethoden geprüft.

Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

Flüssigkeitsweiterleitung (Saline Flow Conductivity)

Die Flüssigkeitsweiterleitung (SFC) einer gequollenen Gelschicht unter Druckbelastung von 0,3 psi (2070 Pa) wird, wie in EP 0 640 330 A1 beschrieben (Seit 19, Zeile 13 bis Seite 21, Zeile 35), als Gel-Layer-Permeability einer gequollenen Gelschicht aus wasserabsorbierenden Polymerpartikeln bestimmt, wobei die in Figur 8 beschriebene Apparatur dahingehend modifiziert wurde, dass die Glasfritte (40) nicht mehr verwendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP 0 640 330 A1. Der Durchfluss wird automatisch erfasst.

Die Flüssigkeitsweiterleitung (SFC) wird wie folgt berechnet:

$$\text{SFC } [cm^3s/g] = (Fg(t=0) \times L0)/(d \times A \times WP),$$

wobei Fg(t=0) der Durchfluss an NaCl-Lösung in g/s ist, der anhand einer linearen Regressionsanalyse der Daten Fg (t) der Durchflussbestimmungen durch Extrapolation gegen t=0 erhalten wird, L0 die Dicke der Gelschicht in cm, d die Dichte der NaCl-Lösung in g/cm$^3$, A die Fläche der Gelschicht in cm$^2$ und WP der hydrostatische Druck über der Gelschicht in dyn/cm$^2$.

Gelbettpermeabilität (Gel Bed Permeability)

Die Gelbettpermeabilität (GBP) einer gequollenen Gelschicht unter Druckbelastung von 0,3 psi (2070 Pa) wird, wie in US 2007/0135785 beschrieben (Absätze [0151] und [0152]), als Gel-Bed-Permeability einer gequollenen Gelschicht aus wasserabsorbierenden Polymerpartikeln bestimmt.

Zentrifugenretentionskapazität (Centrifuge Retention Capacity)

Die Zentrifugenretentionskapazität (CRC) wird gemäß der von der EDANA empfohlenen Testmethode Nr. WSP 241.2-05 "Centrifuge Retention Capacity" bestimmt.

Absorption unter einem Druck von 49,2 g/cm$^2$ (Absorption under Pressure)

Die Absorption unter einem Druck von 49,2 g/cm$^2$ (AUL0.7psi) wird analog der von der EDANA (European Disposables and Nonwovens Association) empfohlenen Testmethode Nr. WSP 242.2-05 "Absorption under Pressure" bestimmt, wobei statt eines Drucks von 21,0 g/cm$^2$ (AUL0.3psi) ein Druck von 49,2 g/cm$^2$

(AUL0.7psi) eingestellt wird.

Beispiele

Herstellung des Grundpolymers:

Beispiel 1

In einem doppelwandigen, 10 l Glasreaktor mit mechanischer Rührung wurden 4931 g einer 37,3 gew.-%igen Natriumacrylatlösung, die zuvor über Aktivkohle filtriert wurde und 376 g Wasser vorgelegt. Unter Rührung und gleichzeitiger Kühlung wurden 470 g Acrylsäure langsam zudosiert. Nach Durchperlen von Stickstoff für 30 Minuten wurden 8,47 g 3-fach ethoxyliertes Glycerintriacrylat sowie 6,32 g einer 30 gew.-%igen Lösung von Natriumpersulfat in Wasser zugegeben und für eine weitere Minute gerührt. Die Reaktionsmischung wurde dabei so gekühlt, dass die Temperatur zu keiner Zeit 35°C überstieg und gegen Ende ca. 20°C betrug. Die Reaktionsmischung wurde anschließend mittels einer Pumpe in einen auf 60°C vorgewärmten und mit Stickstoffgas gespülten IKA® Horizontalkneter des Typs HKS (10 l Volumen) überführt. Schließlich wurden in dem Horizontalkneter unter Rühren 5,64 g einer 1 gew.-%igen Lösung von Ascorbinsäure in Wasser sowie 1,89 g 3 gew.-%iges Wasserstoffperoxid zugesetzt. Die Reaktormanteltemperatur wurde auf 95°C angehoben und nach 15 Minuten Reaktionszeit wurde das entstandene Polymergel dem Horizontalkneter entnommen. Das so erhaltene Polymergel wurde auf Bleche mit Drahtböden verteilt und bei 165°C für 90 Minuten in einem Umlufttrockenschrank getrocknet. Anschließend wurde mit einer Ultrazentrifugalmühle zerkleinert und das Produkt auf 150 bis 850 $\mu$m abgesiebt. Das so hergestellte Grundpolymer hatte eine Zentrifugenretentionskapazität von 36,0 g/g.

Beispiel 2

In einem doppelwandigen, 10 l Glasreaktor mit mechanischer Rührung wurden 4936 g einer 37,3 gew.-%igen Natriumacrylatlösung, die zuvor über Aktivkohle filtriert wurde und 373 g Wasser vorgelegt. Unter Rührung und gleichzeitiger Kühlung wurden 470 g Acrylsäure langsam zudosiert. Nach Durchperlen von Stickstoff für 30 Minuten wurden 6,61 g 3-fach ethoxyliertes Glycerintriacrylat sowie 6,27 g einer 30 gew.-%igen Lösung von Natriumpersulfat in Wasser zugegeben und für eine weitere Minute gerührt. Die Reaktionsmischung wurde dabei so gekühlt, dass die Temperatur zu keiner Zeit 35°C überstieg und gegen Ende ca. 20°C betrug. Die Reaktionsmischung wurde anschließend mittels einer Pumpe in einen auf 60°C vorgewärmten und mit Stickstoffgas gespülten IKA® Horizontalkneter des Typs HKS (10 l Volumen) überführt. Schließlich wurden in dem Horizontalkneter unter Rühren 5,64 g einer 1 gew.-%igen Lösung von Ascorbinsäure in Wasser sowie 1,88 g 3 gew.-%iges Wasserstoffperoxid zugesetzt. Die Reaktormanteltemperatur wurde auf 95°C angehoben und nach 15 Minuten Reaktionszeit wurde das entstandene Polymergel dem Horizontalkneter entnommen. Das so erhaltene Polymergel wurde auf Bleche mit Drahtböden verteilt und bei 165°C für 90 Minuten in einem Umlufttrockenschrank getrocknet. Anschließend wurde mit einer Ultrazentrifugalmühle zerkleinert und das Produkt auf 150 bis 850 μm abgesiebt. Das so hergestellte Grundpolymer hatte eine Zentrifugenretentionskapazität von 41,5 g/g.

Oberflächennachvernetzung und Beschichtung des Grundpolymers:

Beispiel 3

800 g des in Beispiel 1 hergestellten Grundpolymers wurden in einen Lödige® Labormischer überführt und auf 70°C erwärmt. Eine Lösung bestehend aus 0,72 g N-(2-Hydroxyethyl)-2-oxazolidinon, 0,72 g 1,3-Propandiol, 8,8 g Isopropylalkohol, 24,8 g einer 17,4 gew.-%igen Lösung von Aluminiummonoacetat (stabilisiert mit Borsäure) in Wasser, entsprechend 0,0039 mol-% $Al^{3+}$ bezogen auf 100 g Grundpolymer, wurde bei einer Rührgeschwindigkeit von 450 U/min auf das erwärmte Grundpolymer aufgesprüht und für weitere 30 Sekunden bei dieser Geschwindigkeit gemischt. Anschließend wurde für weitere zwei Minuten bei einer Einstellung von 200 U/min gemischt. Nachfolgend wurden die feuchten Polymerpartikel schnell auf eine Produkttemperatur von 200°C erhitzt und für weitere 60 Minuten gemischt. Die oberflächennachvernetzten Polymerpartikel wurden auf Umgebungstemperatur abgekühlt und auf eine Partikelgröße von 150 bis 850 μm abgesiebt.

Die so hergestellten oberflächennachvernetzten Polymerpartikel hatten folgende Eigenschaften:

CRC = 29.6 g/g
AUL0.7psi = 19.1 g/g
GBP = 73 Darcy
SFC = 53 x $10^{-7}$ cm$^3$s/g

Vergleichsbeispiel 1

Es wurde wie in Beispiel 3 verfahren aber die Lösung von Aluminiummonoacetat wurde durch 25,8 g einer 20,8 gew.-%igen Lösung von Aluminiumsulfat in Wasser, entsprechend 0,0039 mol-% $Al^{3+}$ bezogen auf 100 g Grundpolymer, ersetzt.

Die so hergestellten oberflächennachvernetzten Polymerpartikel hatten folgende Eigenschaften:

CRC = 27.6 g/g
AUL0.7psi = 17,9 g/g
GBP = 57 Darcy
SFC = 50 x $10^{-7}$ cm$^3$s/g

Vergleichsbeispiel 2

Es wurde wie in Beispiel 3 verfahren aber die Lösung von Aluminiummonoacetat wurde durch 36,7 g einer 25 gew.-%igen Lösung von Aluminiumtrilaktat in Wasser, entsprechend 0,0039 mol-% $Al^{3+}$ bezogen auf 100 g Grundpolymer, ersetzt

Die so hergestellten oberflächennachvernetzten Polymerpartikel hatten folgende Eigenschaften:

CRC = 27,5 g/g
AUL0.7psi = 19,2 g/g
GBP = 40 Darcy
SFC = 56 x $10^{-7}$ cm$^3$s/g

Das Beispiel 3 und die Vergleichsbeispiele 1 und 2 belegen die hohe Gelbettpermeabilität (GBP) bei gleichzeitig höherer Zentrifugenretentionskapazität (CRC) der erfindungsgemäßen wasserabsorbierenden Polymerpartikel.

Beispiel 4

100 g des kommerziell erhältlichen Superabsorbers Hysorb® T8400 (BASF Corporation) mit einer CRC von 33,4 g/g, einer AUL0.7psi von 22,8 g/g und einer GBP von 6 Darcy wurden in einem Mischer vorgelegt. 2,96 g einer 27 gew.-%igen Lösung von Aluminiummonoacetat (stabilisiert mit Borsäure) in Wasser wurde mittels eines Zerstäubers in acht etwa gleichgroßen Portionen auf den Superabsorber aufgesprüht (0,0058 mol-% $Al^{3+}$ bezogen auf 100 g Superabsorber). Nach jedem Aufsprühen einer Portion wurde der beschichtete Superabsorber für ca. 5 bis 10 Sekunden gemischt. Nach Aufgabe der gesamten Lösung wurde der beschichtete Superabsorber bei 100°C für 60 Minuten in einem Umlufttrockenschrank getrocknet und anschließend auf Umgebungstemperatur abgekühlt.

Der so hergestellte, beschichtete Superabsorber hatte folgende Eigenschaften:

CRC = 31,7 g/g
AUL0.7psi = 21,2 g/g
GBP = 65 Darcy

Vergleichsbeispiel 3

Es wurde wie in Beispiel 4 verfahren aber die Lösung von Aluminiummonoacetat wurde durch 3,69 g einer 27 gew.-%igen Lösung von Aluminiumsulfat in Wasser (0,0058 mol-% $Al^{3+}$ bezogen auf 100 g Superabsorber) ersetzt. Der so hergestellte, beschichtete Superabsorber hatte folgende Eigenschaften:

CRC = 30,9 g/g
AUL0.7psi = 20,2 g/g
GBP = 40 Darcy

Vergleichsbeispiel 4

Es wurde wie in Beispiel 4 verfahren aber die Lösung von Aluminiummonoacetat wurde durch 6,86 g einer 25 gew.-%igen Lösung von Aluminiumtrilaktat in Wasser (0,0058 mol-% $Al^{3+}$ bezogen auf 100 g Superabsorber) ersetzt. Der so hergestellte, beschichtete Superabsorber hatte folgende Eigenschaften:

CRC = 28,5 g/g
AUL0.7psi = 21,7 g/g
GBP = 12 Darcy

Das Beispiel 4 und die Vergleichsbeispiele 3 und 4 belegen die erheblich verbesserte Gelbettpermeabilität (GBP) der erfindungsgemäßen wasserabsorbierenden Polymerpartikel nach der Nachbehandlung aus einer wässrigen Lösung von Aluminiummonoacetat.

Beispiel 5

Der kommerziell erhältliche Superabsorber Hy-Sorb® T8400 (BASF Corporation) mit einer GBP von 6 Darcy wurden auf 300 bis 600 $\mu$m abgesiebt. 10 g des abgesiebten Superabsorbers wurden mit 80 mg Aluminiummonoacetat (0,0058 mol-% $Al^{3+}$ bezogen auf 100 g Superabsorber) gemischt. Der so behandelte Superabsorber hatte folgende Eigenschaften:

GBP = 55 Darcy

Vergleichsbeispiel 5

Es wurde wie in Beispiel 5 verfahren aber Aluminiummonoacetat wurde durch 194 mg $Al_2(SO_4)_3$ x 18 $H_2O$ (0,0058 mol-% $Al^{3+}$ bezogen auf 100 g Superabsorber) ersetzt. Der so hergestellte, beschichtete Superabsorber hatte folgende Eigenschaften:

GBP = 27 Darcy

Vergleichsbeispiel 6

Es wurde wie in Beispiel 5 verfahren aber Aluminiummonoacetat wurde durch 172 mg Aluminiumtrilaktat (0,0058 mol-% $Al^{3+}$ bezogen auf 100 g Superabsorber) ersetzt. Der so hergestellte, beschichtete Superabsorber hatte folgende Eigenschaften:

GBP = 8 Darcy

Das Beispiel 5 und die Vergleichsbeispiele 5 und 6 belegen die erheblich verbesserte Gelbettpermeabilität der erfindungsgemäßen wasserabsorbierenden Polymerpartikel nach der Nachbehandlung ohne Lösungsmittel.

Beispiel 6

1000 g des in Beispiel 2 hergestellten Grundpolymers wurden in einen Lödige® Labormischer überführt und auf 25°C temperiert. Eine Lösung bestehend aus 0,7 g Ethylenglycoldiglycidylether, 12,0 g 1,2-Propandiol und 27 g Wasser wurde bei einer Rührgeschwindigkeit von 450 U/min auf das Grundpolymer aufgesprüht und für weitere 30 Sekunden bei dieser Geschwindigkeit gemischt. Anschließend wurde für weitere zwei Minuten bei einer Einstellung von 200 U/min gemischt. Nachfolgend wurden die feuchten Polymerpartikel schnell auf eine Produkttemperatur von 170°C erhitzt und für weitere 45 Minuten gemischt. Die oberflächennachvernetzten Polymerpartikel wurden auf Umgebungstemperatur abgekühlt und auf eine Partikelgröße von 150 bis 600 $\mu$m abgesiebt und wiesen folgende Eigenschaften auf:

CRC = 37,3 g/g
AUL0.7psi = 24,8 g/g
GBP = 4 Darcy

100g der so erhaltenen oberflächennachvernetzten Polymerpartikel wurden unter Rühren mit 1,5 g einer 27 gew.-%igen Lösung von Aluminiummonoacetat (stabilisiert mit Borsäure), entsprechend 0,0030 mol-% $Al^{3+}$ bezogen auf 100 g Grundpolymer, besprüht und anschließend für 60 Minuten bei 100°C getrocknet.
Die so hergestellten beschichteten Polymerpartikel hatten folgende Eigenschaften:

CRC = 37,2 g/g
AUL0.7psi = 22,9 g/g
GBP = 23 Darcy

Beispiel 7

Es wurde wie in Beispiel 6 verfahren aber die oberflächennachvernetzten Polymerpartikel wurden mit 0,4 g trockenen Aluminiummonoacetat (stabilisiert mit Borsäure), entsprechend 0,0030 mol-% $Al^{3+}$ bezogen auf 100 g Grundpolymer, vermischt.
Die so hergestellten beschichteten Polymerpartikel hatten folgende Eigenschaften:

CRC = 36,8 g/g
AUL0.7psi = 23,5 g/g
GBP = 20 Darcy

**Patentansprüche**

1.  Verfahren zur Herstellung wasserabsorbierender Polymerpartikel durch Polymerisation einer Monomerlösung oder -suspension, enthaltend

    a) mindestens ein ethylenisch ungesättigtes, säuregruppentragendes Monomer, das zumindest teilweise neutralisiert sein kann,

b) mindestens einen Vernetzer,

c) mindestens einen Initiator,

d) optional ein oder mehrere mit den unter a) genannten Monomeren copolymerisierbare ethylenisch ungesättigte Monomere und

e) optional ein oder mehrere wasserlösliche Polymere,

umfassend Trocknung, Mahlung, Klassierung, und Oberflächennachvernetzung, **dadurch gekennzeichnet, dass** die wasserabsorbierenden Polymerpartikel vor, während oder nach der Oberflächennachvernetzung mit mindestens einem basischen Salz aus einem dreiwertigen Metallkation und einem einwertigen Carbonsäureanion beschichtet werden, wobei das molare Verhältnis von Metallkation zu Carbonsäureanion in den basischen Salzen von 0,6 bis 1,2 beträgt und von 0,0008 bis 0,02 mol des dreiwertigen Metallkations pro 100 g der zu beschichtenden wasserabsorbierende Polymerpartikel eingesetzt werden.

**2.** Verfahren gemäß Anspruch 1, **dadurch gekennzeichnet, dass** das dreiwertige Metallkation ein Aluminiumkation ist.

**3.** Verfahren gemäß einem der Ansprüche 1 bis 2, **dadurch gekennzeichnet, dass** das einwertige Carbonsäureanion ein Acetatanion ist.

**4.** Verfahren gemäß einem der Ansprüche 1 bis 3, **dadurch gekennzeichnet, dass** das basische Salz mindestens einen Stabilisator enthält.

**5.** Verfahren gemäß Anspruch 4, **dadurch gekennzeichnet, dass** der Stabilisator Borsäure ist.

**6.** Verfahren gemäß einem der Ansprüche 1 bis 5, **dadurch gekennzeichnet, dass** das basische Salz als wässrige Lösung eingesetzt wird.

## Claims

**1.** A process for producing water-absorbing polymer particles by polymerizing a monomer solution or suspension comprising

a) at least one ethylenically unsaturated monomer which bears acid groups and may be at least partly neutralized,

b) at least one crosslinker,

c) at least one initiator,

d) optionally one or more ethylenically unsaturated monomers copolymerizable with the monomers specified under a) and

e) optionally one or more water-soluble polymers,

comprising drying, grinding, classifying and surface postcrosslinking, which comprises coating the water-absorbing polymer particles, before, during or after the surface postcrosslinking, with at least one basic salt of a trivalent metal cation and a monovalent carboxylic acid anion, wherein the molar ratio of metal cation to carboxylic acid anion in the basic salts is from 0.6 to 1.2, and from 0.0008 to 0.02 mol of the trivalent metal cation is used per 100 g of the water-absorbing polymer particles to be coated.

**2.** The process according to claim 1, wherein the trivalent metal cation is an aluminum cation.

**3.** The process according to either of claims 1 and 2, wherein the monovalent carboxylic acid anion is an acetate anion.

**4.** The process according to any one of claims 1 to 3, wherein the basic salt comprises at least one stabilizer.

**5.** The process according to claim 4, wherein the stabilizer is boric acid.

**6.** The process according to any one of claims 1 to 5, wherein the basic salt is used as an aqueous solution.

## Revendications

**1.** Procédé pour la préparation de particules de polymère absorbant l'eau par polymérisation d'une solution ou d'une suspension de monomères, contenant

a) au moins un monomère éthyléniquement insaturé, portant des groupes acides, qui peut être au moins partiellement neutralisé,

b) au moins un agent de réticulation,

c) au moins un initiateur,

d) éventuellement un ou plusieurs monomères éthyléniquement insaturés copolymérisables avec les monomères mentionnés au point a) et

e) éventuellement un ou plusieurs polymères solubles dans l'eau,

comprenant le séchage, le broyage, le calibrage, et la post-réticulation en surface, **caractérisé en ce que** les particules de polymère absorbant l'eau sont revêtues avant, pendant ou après la post-réticulation en surface avec au moins un sel basique composé d'un cation métallique trivalent et d'un anion d'acide carboxylique monovalent, le rapport molaire de cation métallique à anion d'acide carboxylique dans les sels basiques étant de 0,6 à 1,2 et de 0,0008 à 0,02 mole du cation métallique trivalent est utilisée par 100 g des particules de polymère absorbant l'eau devant être revêtues.

2. Procédé selon la revendication 1, **caractérisé en ce que** le cation métallique trivalent est un cation aluminium.

3. Procédé selon l'une quelconque des revendications 1 et 2, **caractérisé en ce que** l'anion d'acide carboxylique monovalent est un anion acétate.

4. Procédé selon l'une quelconque des revendications 1 à 3, **caractérisé en ce que** le sel basique contient au moins un stabilisateur.

5. Procédé selon la revendication 4, **caractérisé en ce que** le stabilisateur est l'acide borique.

6. Procédé selon l'une quelconque des revendications 1 à 5, **caractérisé en ce que** le sel basique est utilisé en tant que solution aqueuse.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2000053644 A1
- WO 2000053664 A1
- WO 2005108472 A1
- WO 2007037522 A
- WO 2007121937 A
- WO 2008092843 A1
- WO 2002055469 A1
- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 2002032962 A2
- WO 2001038402 A1
- DE 3825366 A1
- US 6241928 B
- WO 2008040715 A2
- WO 2008052971 A1
- EP 0083022 A2
- EP 0543303 A1
- EP 0937736 A2
- DE 3314019 A1
- DE 3523617 A1
- EP 0450922 A2
- DE 10204938 A1
- US 6239230 B
- DE 4020780 C1
- DE 19807502 A1
- DE 19807992 C1
- DE 19854573 A1
- DE 19854574 A1
- DE 10204937 A1
- DE 10334584 A1
- EP 1199327 A2
- WO 2003031482 A1
- DE 3713601 A1
- EP 0640330 A1
- US 20070135785 A

**In der Beschreibung aufgeführte Nicht-Patentliteratur**

- **F.L. BUCHHOLZ ; A.T. GRAHAM.** Modern Superabsorbent Polymer Technology. Wiley-VCH, 1998, 71-103